# EUROPEAN PATENT APPLICATION

(11) **EP 2 150 056 A1**
(43) Date of publication of application: **03.02.2010**
(21) Application number: 08425530.6
(22) Date of filing: 30.07.2008
(51) Int. Cl.: H04N 7/18, H04M 11/02

(54) **Video Entry-phone system using as transmission support the twisted pair supplying at low voltage the outside station and electrical supply network of an apartment**

(71) Applicant: Comelit Group S.p.a., 24020 Rovetta San Lorenzo (BG) (IT)
(72) Inventor: Barzasi, Edoardo, 24020 Rovetta (Bergamo) (IT)
(74) Representative: Petruzziello, Aldo

(57) **Abstract**

A video entry-phone system (1) is disclosed, comprising at least one outside station (5) supplied at low voltage by means of a twisted pair (4) and connected by means of a transmission support to at least one video entry-phone (11), wherein the transmission support comprises the twisted pair (4) which supplies the at least one outside station (5), the electrical supply network (2) of an apartment (3) and a two-way interface unit (6) which connects the twisted pair (4) to the electrical supply network (2).

The two-way interface unit (6) is normally placed in parallel with the meter (7) serving the apartment (3), to which the electrical supply network (2) is connected.

The audio/video signals and, preferably, the opening command of the electric lock (8) are transmitted on the transmission support (2, 4) modulated according to known modulation standards, such as - for example - Home-Plug ad Ethernet.

## Description

The present invention refers to a video entry-phone system comprising at least one outside station supplied at low voltage by means of a twisted pair and connected by a transmission support to at least one video entry-phone situated in an apartment, wherein the transmission support comprises the twisted pair that supplies the at least one outside station, the electrical supply network of an apartment and a two-way interface unit that connects the twisted pair to the electrical supply network.

A video entry-phone system allows a person to check visually, from their own apartment, the identity of the person who has pressed the call button of the outside station, to converse with that person and to let them in, if so desired, by commanding the electric lock of the outside door or gate to open by means of a pushbutton (normally) belonging to the video entry-phone.

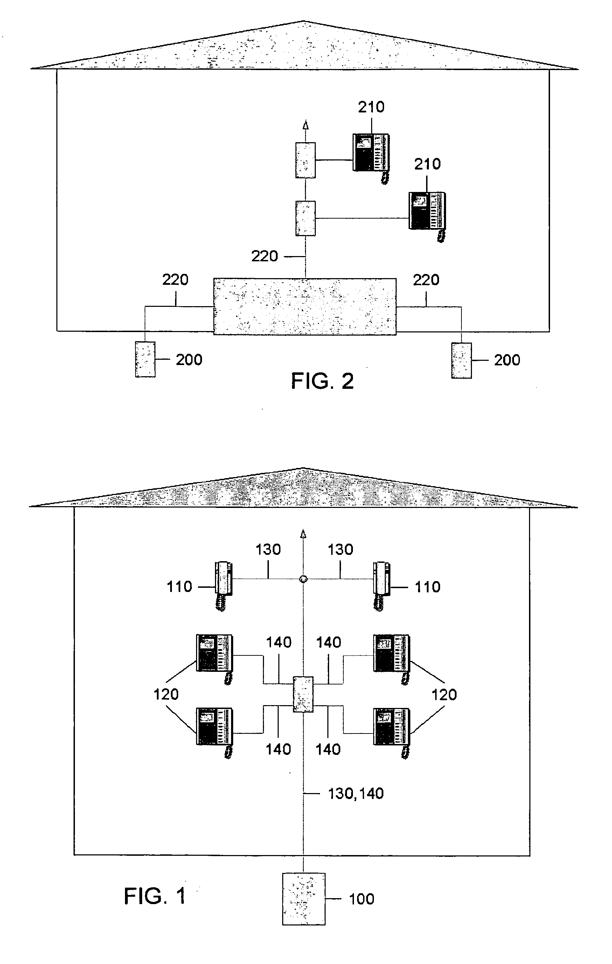

Figure 1 shows diagrammatically a building 1000 in which a video entry-phone system of the prior art is installed, which requires the installation of a cable 130 comprising five conductors to connect an entry-phone 110 to the outside station 100 and of a cable 140 comprising seven dedicated conductors plus a coaxial cable to connect a video entry-phone 120 to the outside station 100.

Obviously, if entry-phones 110 or video entry-phones 120 are not contemplated, the relative cable (130 or 140) can be omitted.

Figure 2 shows diagrammatically a building 1000 in which is installed a second, technologically advanced video entry-phone system of the prior art, wherein the outside stations 200 are connected to a video entry-phone 210 by a cable 220 comprising two conductors.

For simplicity of the graphic representation, the switching and/or distribution devices that selectively connect the outside station 100 to an entry-phone 110 or to a video entry-phone 120, or one of the outside stations 200 with a video entry-phone 210 have been indicated in Figures 1 and 2, respectively, with blocks without any reference numerals or letters.

The entry-phones 110 or the video entry-phones (120, 210) are normally equipped with a pushbutton apt to command the opening of the electric lock of the outer door or gate.

As is known (and as confirmed by the above described examples) an entry-phone system (and, even more so, a video entry-phone system) requires the installation of a network of dedicated cables to put the entry-phones and/or the video entry-phones situated in the individual apartments into communication with an at least one outside station.

Said dedicated network has significant installation and maintenance costs (especially if installed in residential complexes which are rather large and/or which comprise dozens of apartments) and it has the further drawback of normally having a single point of access in each apartment, making it necessary to place the video entry-phone (or the entry-phone) in a pre-set position, corresponding to said point of access.

Object of the present invention is to eliminate the drawbacks and the limitations presented by the video entry-phone systems of the prior art. Said object is achieved, in accordance with the invention, with a video entry-phone system having the characteristics indicated in appended independent claim 1.

Further advantageous characteristics of the invention are apparent from the dependent claims.

The present invention relates to a video entry-phone system comprising at least one outside station powered at low voltage (normally 12 VAC or 12 VDC) by means of a twisted pair and connected by means of a transmission support to at least one video entry-phone situated in an apartment, wherein the transmission support comprises the twisted pair that supplies the at least one outside station, the apartment's electrical supply network (that is the electrical supply network, normally at 220VAC, installed inside the building and situated "downstream" of the meter serving said apartment) and a two-way interface unit, normally placed in parallel with the meter serving the apartment, which connects the twisted pair to the electrical supply network.

The addition of the two-way interface unit therefore allows pre-existing elements (the twisted pair that supplies the at least one outside station at low voltage and the electrical supply network of the apartment) to be used as the transmission support of a video entry-phone system realised according to the invention, without requiring laying of a dedicated cable network.

The audio/video signals and, preferably, the opening command of the electric lock are transmitted on the transmission support modulated according to known modulation standards such as, for example, Home-Plug and Ethernet.

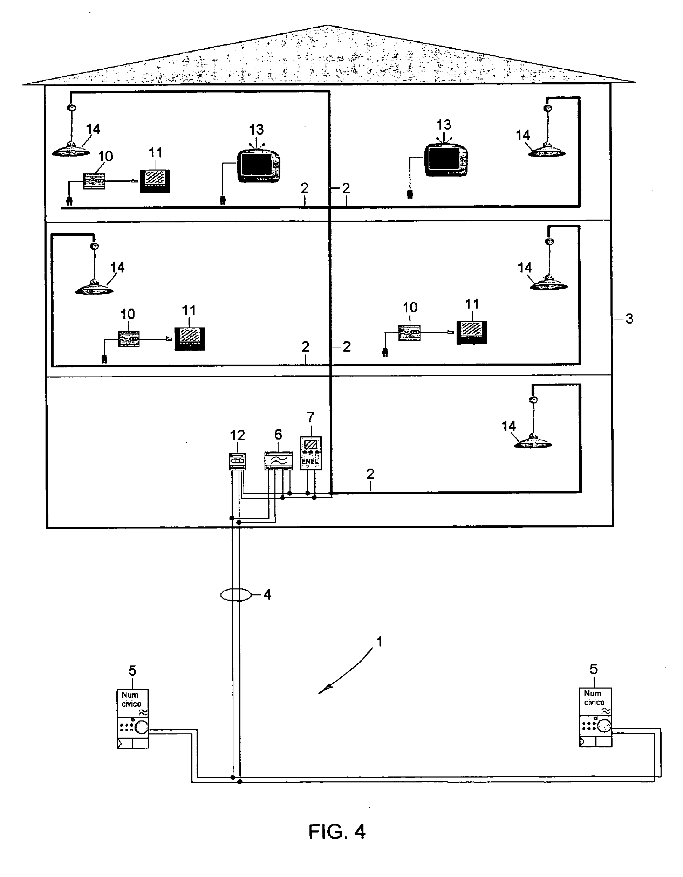

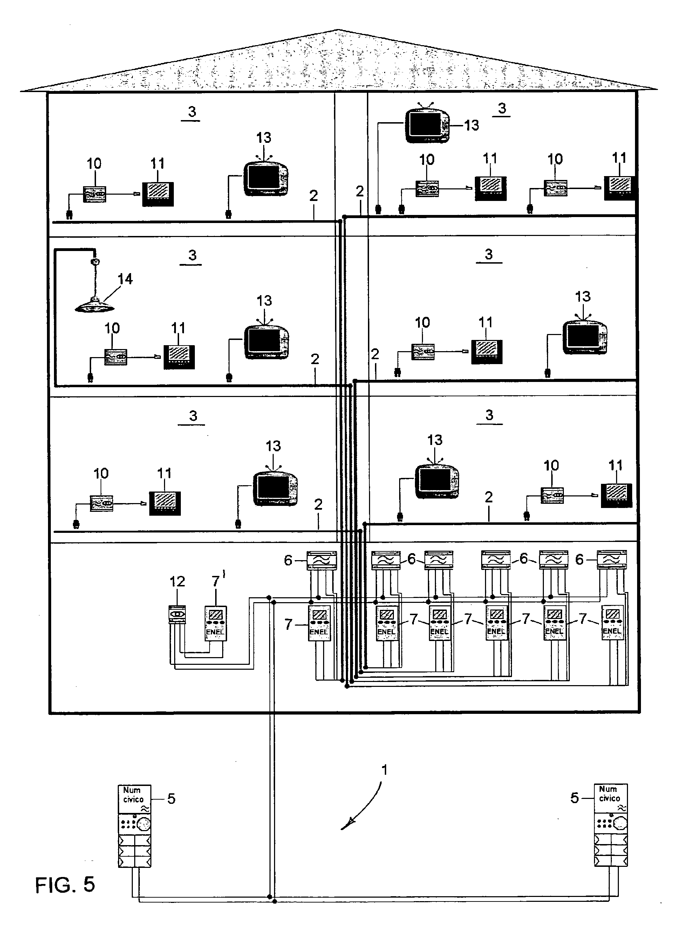

The invention will now be described with reference to a purely exemplifying (and therefore non-limiting) embodiment illustrated in the appended figures, wherein:
- Figures 1 and 2 show diagrammatically two video entry-phone systems of the prior art;
- Figure 3 shows diagrammatically the block diagram of a video entry-phone system according to the invention;
- Figure 4 shows diagrammatically a single-family building in which a video entry-phone system according to the invention is installed;
- Figure 5 shows diagrammatically a multi-family building in which a video entry-phone system according to the invention is installed.
   In the appended figures corresponding elements will be designated by the same reference numerals.

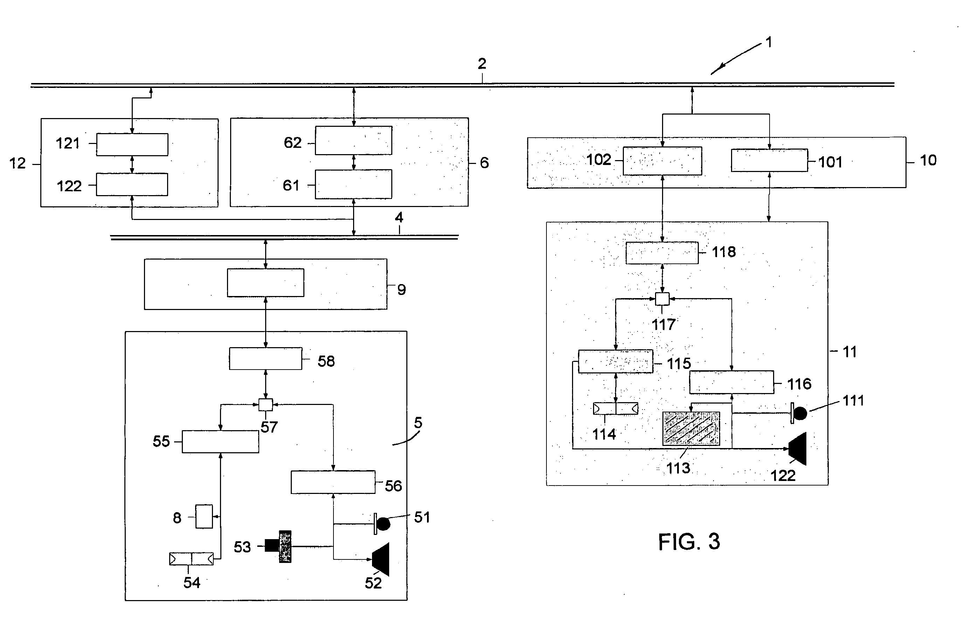

   Figure 3 shows diagrammatically the block diagram of a video entry-phone system 1, realised according to the invention, which comprises an outside station 5 supplied at low voltage (12VAC or 12VDC) by means of a twisted pair 4 and connected by means of a transmission support to at least one video entry-phone 11 situated in an apartment, wherein the transmission support comprises the twisted pair 4 that supplies the outside station 5, the electrical supply network 2 of the apartment (that is, the electrical supply network, normally at 220 VAC, installed inside the apartment and situated "downstream" of the meter 7, serving the apartment, to which the electrical supply network 2 is connected) and a two-way interface unit 6 that connects the twisted pair 4 to the electrical supply network 2.
   The two-way interface unit 6 is normally placed in parallel to the meter 7, omitted in Figure 3 but visible in Figures 4 and 5.
   The video entry-phone system 1 comprises at least one outside station 5 connected to the twisted pair 4 by means of a two-way modulation/demodulation unit 9, the interface unit 6 and at least one video entry-phone 11 connected to the electrical supply network 2 by means of a coupling module 10.
   The two-way modulation/demodulation units will be indicated hereunder by the term "modem".
   The outside station 5 differs from an outside station of the prior art essentially in that it comprises a unit 58 apt to modulate, according to a first known modulation standard, the signals coming from means (the microphone 51, the video camera 53 and the call button 54) belonging to the outside station 5 and to demodulate from said first modulation standard the signals destined for further means (the electric lock 8 and the loudspeaker 52) belonging to the outside station 5.
   These means (the electric lock 8, the microphone 51, the loudspeaker 52, the video camera 53 and the call button 54) and the related control and management circuits (55, 56 and 57) will not be described herein because they are per se known.
   The unit 58 of the outside station 5 is connected to the low voltage twisted pair 4 by means of the modem 9, which converts the signals generated by the unit 58 from the first modulation standard to a second modulation standard (also known) and the signals to be received by the unit 58 from the second modulation standard to the first one.
   In the embodiment described here, the first modulation standard is Ethernet (which is transmitted on at least four wires) and the second modulation standard is Home-Plug (which can be transmitted on the low-voltage twisted pair 4 and on the electrical supply network 2) but, without departing from the scope of the invention, use can be made of two known modulation standards other than those mentioned above or of the same modulation standard, operating on two wires, if the unit 58 of the outside station 5 is able to "communicate" on two wires.
   The outside station 5 and the modem 9 are supplied at low voltage by the supply module 12, which comprises the power supply 121 and a filter 122 which blocks the modulated signals present on the twisted pair 4.
   The interface unit 6, which connects the low voltage twisted pair 4 and the electrical supply network 2, comprises two modems (61, 62) placed in series with each other, where the first modem 61 is able to convert the signals present on the twisted pair 4 from Home-Plug to Ethernet and the signals present at the output from the second modem 62 from Ethernet to Home-Plug, whereas the second modem 62 is able to convert the signals present on the supply network 2 from Home-Plug to Ethernet and the signals present at the output from the first modem 61 from Ethernet to Home-Plug.
   This double conversion of the modulation standard is made necessary by the fact that the current technology does not allow a modulated signal to be transferred directly from a low voltage transmission support (the twisted pair 4) to a higher voltage transmission support (the network 2) and vice versa and it will be possible to omit it if and when the evolution of the art allows a modulated signal to be transferred directly between the above mentioned transmission supports.
   The coupling module 10 comprises a power supply 101 which supplies the video entry-phone 11 and a modem 102 able to convert the signals present on the supply network 2 from Home-Plug to Ethernet and the signals present at the output from a unit 118 of the video entry-phone 11 from Ethernet to Home-Plug.
   The power supply 101 can be incorporated into the video entry-phone 11 and the modem 102 can be omitted if the unit 118 of the video entry-phone 11 is able to "communicate" on two wires.
   In the embodiment described here, the video entry-phone 11 comprises a unit 118 able to modulate according to Ethernet signals coming from means (the microphone 111 and the door-opening pushbutton 114) belonging to the video entry-phone 11 and to demodulate from Ethernet signals destined for other means (the video screen 113 and the loudspeaker 112) belonging to the video entry-phone 11.
   Said means (the microphone 111, the loudspeaker 112, the video screen 113 and the door-opening pushbutton 114) and the relative control and management circuits (115, 116 and 117) will not be described herein because they are per se known.
   Units 58 and 118, belonging, respectively, to the outside station 5 and to the video entry-phone 11 and the modems belonging to the conversion module 9, to the interface unit 6 and to the coupling module 10 will not be described because they are known and can be implemented using components available on the market, for example in the form of integrated circuits.
   An important characteristic of the video entry-phone system 1 created according to the invention is the fact that it is sufficient to insert the plug of the coupling module 10 into a socket of the supply network 2 to connect the coupling module 10 and the video entry-phone 11 with the transmission system comprising the twisted pair 4 and the electrical supply network 2, without having to create further connections or to install dedicated networks.
   This makes it possible to use more than one coupling module/video entry-phone unit and to move it/them in the apartment 3 into the preferred position on a case-by-case basis, overcoming the limitation of video entry-phone systems of the prior art in which the video entry-phone occupies a fixed position.
   Furthermore, the fact that the outside stations 5 are supplied at 12VAC or at 12VDC does not affect the functioning of a video entry-phone system according to the invention.
   Figure 4 shows diagrammatically a one-family building (typically a cottage) in which a video entry-phone system 1 according to the invention is installed; the electrical supply network 2 of the apartment 3 coincides with that of the cottage.
   Visible in Figure 4 are two outside stations 5 (also including the modem 9 of figure 3) supplied at low voltage by the power supply 12 through the twisted pair 4, the two-way interface unit 6 placed in parallel with the meter 7, the electrical supply network 2
- connected to the meter 7 - which branches into all the rooms of the apartment (of the cottage) 3 and some video entry-phones 11, each of which is connected to the electrical supply network 2 by means of a module 10, which can be connected to any socket of the electrical supply network 2.

Also visible in Figure 4 are some of the electrical appliances 13 and lighting fixtures 14 situated inside the apartment 3 and supplied by the electrical supply network 2.

Figure 5 shows diagrammatically a multi-family building in which is installed a video entry-phone system 1 according to the invention, which differs from that of Figure 4 essentially in that it comprises a plurality of two-way interface units 6, each of which connects one of the outside stations 5 with the electrical supply network 2 of an apartment 3 (indicated diagrammatically, in Figure 5, as a one-room apartment) and is situated in parallel to the meter 7 serving said apartment 3.

Visible in Figure 5 also are some electrical appliances 13 and lighting fixtures 14 situated inside the apartments 3 and supplied by the electrical supply network 2 and a further meter 7' to which are connected the power supply 12 and other possible shared services, omitted in Figure 5 because they are per se known and in any case outside the scope of the present invention.

## Claims

1. A video entry-phone system (1) comprising at least one outside station (5) supplied at low voltage by means of a twisted pair (4) and connected by means of a transmission support to at least one video entry-phone (11) situated in an apartment (3), **characterised in that** the transmission support comprises the twisted pair (4) that supplies the at least one outside station (5), the electrical supply network (2) of the apartment (3) and a two-way interface unit (6) that connects the twisted pair (4) to the electrical supply network (2).

2. A video entry-phone system (1) as in claim 1, **characterised in that** it comprises at least one outside station (5) connected to the twisted pair (4) by means of a two-way modulation/demodulation unit (9), the interface unit (6) and at least one video entry-phone (11) connected to the electrical supply network (2) by means of a coupling module (10).

3. A video entry-phone system (1) as in claim 1, **characterised in that** the two-way interface unit (6) is placed in parallel to the meter (7), serving the apartment (3), to which the electrical supply network (2) is connected.

4. A video entry-phone system (1) as in claim 1, **characterised in that** the audio/video signals are transmitted on the transmission support (2, 4) modulated according to known modulation standards.

5. A video entry-phone system (1) as in claim 4, **characterised in that** also the opening command of the electric lock (8) is transmitted on the transmission support (2, 4) modulated according to said known modulation standards.

6. A video entry-phone system (1) as in claim 2, **characterised in that** the at least one outside station (5) comprises a unit (58) apt to modulate according to a first known modulation standard the signals coming from means belonging to the at least one outside station (5) and to demodulate from said first modulation standard signals destined for further means belonging to said at least one outside station (5).

7. A video entry-phone system (1) as in claim 6, **characterised in that** the unit (58) belonging to the at least one outside station (5) is connected to the low voltage twisted pair (4) by means of a two-way modulation/demodulation unit (9), apt to convert from the first modulation standard to a second known modulation standard the signals generated by the unit (58) belonging to the at least one outside unit (5) and to convert from the second modulation standard to the first modulation standard the signals to be received from said unit (58) belonging to the at least one outside unit (5).

8. A video entry-phone system (1) as in claim 2, **characterised in that** the outside station (5) and the two-way modulation/demodulation unit (9) are supplied at low voltage by a supply module (12) comprising a power supply (121) and a filter (122) apt to block the signals present on the twisted pair (4).

9. A video entry-phone system (1) as in claim 2, **characterised in that** the interface unit (6) comprises two two-way modulation/demodudulation units (61, 62) placed in series with each other, the first two-way modulation/demodulation unit (61) being apt to convert the signals present on the twisted pair (4) from the second modulation standard to the first modulation standard and to convert the signals present at the output from the second two-way modulation/demodulation unit (62) from the first modulation standard to the second modulation standard, the second modulation/demodulation unit (62) being apt to convert the signals present on the electrical supply network (2) from the second modulation standard to the first modulation standard and the signals present at the output from the first two-way modulation/demodulation unit (61) from the first modulation standard to the second modulation standard.

10. A video entry-phone system (1) as in claim 2, **characterised in that** the coupling module (10) comprises at least one two-way modulation/demodulation unit (102) apt to convert the signals present on the electric supply network (2) from the second modulation standard to the first modulation standard and the signals present at the output from the video entry-phone (11) from the first modulation standard to the second modulation standard.

11. A video entry-phone system (1) as in claim 2, **characterised in that** the at least one video entry-phone (11) comprises an unit (118) apt to modulate according to the first modulation standard signals coming from means belonging to the at least one video entry-phone (11) and to demodulate from said first modulation standard signals destined for further means belonging to the at least one video entry-phone (11).

12. A video entry-phone system (1) as in at least one of claims 4 to 11, **characterised in that** the first modulation standard is Ethernet and the second modulation standard is Home-Plug.
